# EUROPEAN PATENT APPLICATION

(11) **EP 4 625 763 A1**
(43) Date of publication of application: **01.10.2025**
(21) Application number: 23894385.6
(22) Date of filing: 01.11.2023
(51) Int. Cl.: H02K 1/14

(54) **ROTARY ELECTRIC MACHINE**

(30) Priority: 25.11.2022 JP 2022188690
(71) Applicant: DENSO CORPORATION, Kariya-city, Aichi 448-8661 (JP)
(72) Inventor: KATO, Hidenori, Kariya-city, Aichi 448-8661 (JP); YAMASHITA, Yuji, Kariya-city, Aichi 448-8661 (JP)
(74) Representative: Kuhnen & Wacker Patent- und Rechtsanwaltsbüro PartG mbB
(86) International application number: PCT/JP2023/039471
(87) International publication number: WO 2024/111373

(57) **Abstract**

A rotary electric machine includes: a rotor that includes a plurality of magnetic poles arranged in a circumferential direction; and a stator. The stator includes: a stator core which includes a plurality of teeth arranged in the circumferential direction; and a plurality of stator windings which are respectively provided for a plurality of phases and are wound on the plurality of teeth using concentrated winding. A number of the plurality of magnetic poles of the rotor is 18 ± 4, and a number of a plurality of slots, each of which is formed between corresponding adjacent two of the plurality of teeth, is 18; or the number of the magnetic poles of the rotor is 18 ± 2, and the number of the plurality of slots, each of which is formed between the corresponding adjacent two of the plurality of teeth, is 18; and one of the stator and the rotor has a skew that is configured to limit radial vibrations induced by 8th-order harmonic components and 10th-order harmonic components.

## Description

### CROSS REFERENCE TO RELATED APPLICATION

This application is based on and incorporates herein by reference Japanese Patent Application No. 2022-188690 filed on November 25, 2022.

### TECHNICAL FIELD

The present disclosure relates to a rotary electric machine.

### BACKGROUND ART

As a rotary electric machine with coils wound using concentrated winding, for example, the rotary electric machine described in the patent literature 1 is known. The patent literature 1 discloses a rotary electric machine with a specific number of magnetic poles of a rotor and a specific number of slots each formed between corresponding adjacent two of teeth of a stator. Specifically, the patent literature 1 discloses: a rotary electric machine with the number of the magnetic poles being 14 and the number of the slots being 18; a rotary electric machine with the number of the magnetic poles being 22 and the number of the slots being 18; a rotary electric machine with the number of the magnetic poles being 16 and the number of the slots being 18; and a rotary electric machine with the number of the magnetic poles being 20 and the number of the slots being 18. In these rotary electric machines, the phase difference between the magnetomotive forces generated at the coil bodies of different phases is set within a predetermined phase range that includes 20° in electrical angle. By doing so, it is thought that the 6th-order harmonic components or 12th-order harmonic components are canceled out, thereby limiting torque ripple.

### CITATION LIST

### PATENT LITERATURE

PATENT LITERATURE 1: JP7103299B2

### SUMMARY OF INVENTION

The above-mentioned patent literature 1 was filed by the applicant of the present application. However, according to the applicant of the present application, it has been further found that in the rotary electric machine with the specific number of the magnetic poles and the specific number of the slots as described above, radial electromagnetic forces are generated by the 8th-order harmonic components and the 10th-order harmonic components, causing the stator to deform into an elliptical form. This deformation, in turn, leads to radial vibrations. In this case, there is concern that the rotary electric machine may experience issues such as noise, leading to a decrease in quietness. It has also been confirmed that such radial vibrations occur in a rotary electric machine with a specific number of the magnetic poles, which is fourteen, and a specific number of the slots, which is eighteen, but such radial vibrations do not become a concern in a rotary electric machine with a specific number of the magnetic poles, which is eight, and a specific number of the slots, which is twelve.

The present disclosure has been made in view of the above issues, and it is an objective of the present disclosure to improve quietness of a rotary electric machine with a specific number of magnetic poles and a specific number of slots.

According to the present disclosure, there is provided a rotary electric machine including:
a rotor that includes a plurality of magnetic poles arranged in a circumferential direction; and
a stator that includes:
   a stator core which includes a plurality of teeth arranged in the circumferential direction; and
   a plurality of stator windings which are respectively provided for a plurality of phases and are wound on the plurality of teeth using concentrated winding, wherein:
a number of the plurality of magnetic poles of the rotor is 18 ± 4, and a number of a plurality of slots, each of which is formed between corresponding adjacent two of the plurality of teeth, is 18;
   or
the number of the plurality of magnetic poles of the rotor is 18 ± 2, and the number of the plurality of slots, each of which is formed between the corresponding adjacent two of the plurality of teeth, is 18; and
one of the stator and the rotor has a skew that is configured to limit radial vibrations induced by 8th-order harmonic components and 10th-order harmonic components.

In the case of the structure where the number of the plurality of magnetic poles of the rotor is 18 ± 4, and the number of the plurality of slots is 18; or the number of the plurality of magnetic poles of the rotor is 18 ± 2, and the number of the plurality of slots is 18, radial electromagnetic forces may possibly be generated due to the 8th-order harmonic components and the 10th-order harmonic components, and these radial electromagnetic forces may possibly deform the stator into an elliptical form, raising concerns about a decrease in the quietness. In this regard, in the rotary electric machine discussed above, there is adapted the structure where at least one of the stator and the rotor has the skew that is configured to limit the radial vibrations induced by the 8th-order harmonic components and the 10th-order harmonic components. In this case, by adding the skew structure, the radial electromagnetic forces induced by the 8th-order harmonic components and the 10th-order harmonic components can be reduced, and the deformation of the stator can be limited. As a result, the quietness of the rotary electric machine with the specific number of the magnetic poles and the specific number of the slots can be improved.

### BRIEF DESCRIPTION OF DRAWINGS

The present disclosure, together with additional objectives, features and advantages thereof, will be best understood from the following description in view of the accompanying drawings.
FIG. 1 is a longitudinal cross-sectional view of an electric motor.
FIG. 2 is a transverse cross-sectional view of the electric motor.
FIG. 3 is a diagram showing an electrical structure of a control device.
FIG. 4 is a perspective view of a stator.
FIG. 5 is a perspective view showing a structure of a stator core.
FIG. 6 is a winding configuration diagram of stator windings.
FIG. 7 is a diagram showing a corresponding relationship of each winding segment of the stator windings relative to its corresponding tooth.
FIG. 8 is a diagram for explaining generation of radial acceleration induced by 8th-order harmonic components and 10th-order harmonic components.
FIG. 9 is a perspective view showing a stepped skew structure of the stator core.
FIG. 10 is a diagram for explaining a skew angle of the stator core.
FIG. 11 is a diagram illustrating the relationship between a radial vibration acceleration (i.e., a radial vibration acceleration level), which is induced by the 8th-order harmonic components and the 10th-order harmonic components, and the skew angle.
FIG. 12 is a perspective view showing a linear skew structure of the stator core.
FIG. 13 is a perspective view showing a skew structure of a rotor.

### DESCRIPTION OF EMBODIMENTS

Hereinafter, embodiments will be described with reference to the drawings. Among the following embodiments, portions, which are the same or equivalent to each other, will be indicated by the same reference signs, and redundant description of these portions are omitted for the sake of simplicity. In the present embodiment, an electric motor 10, which serves as a rotary electric machine, is exemplified and is explained.

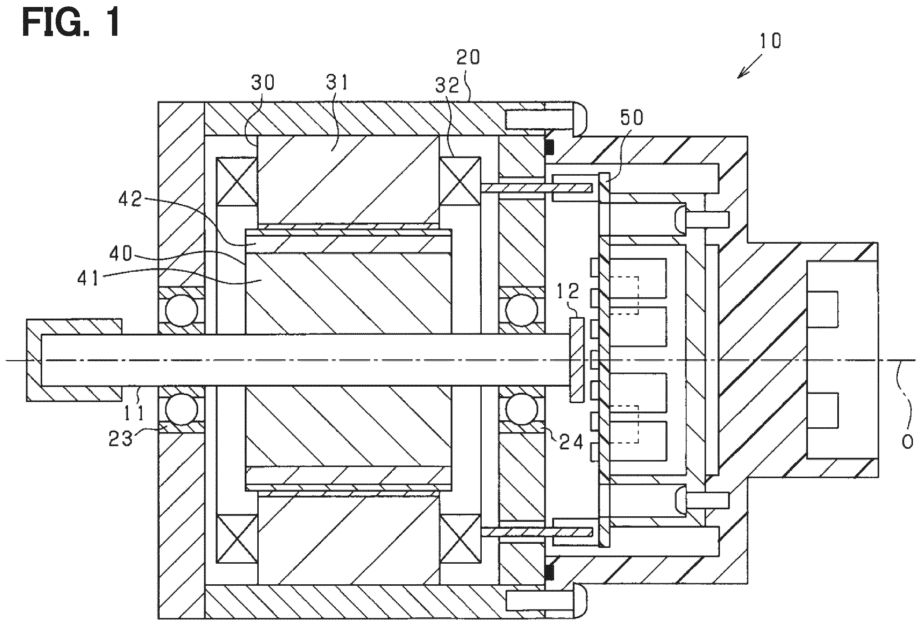

The electric motor 10 shown in FIG. 1 is a permanent magnet field motor, specifically a permanent magnet synchronous machine having three-phase windings. In other words, the electric motor 10 is a brushless motor. The three-phase windings may include two systems of three-phase windings. The electric motor 10 includes: a housing 20; a stator 30 that is fixed to the housing 20; a rotor 40 that rotates relative to the stator 30; and a rotatable shaft 11 to which the rotor 40 is fixed. In the present embodiment, an axial direction refers to an axial direction of a central axis of the rotatable shaft 11, and a radial direction refers to a radial direction of the central axis of the rotatable shaft 11. Furthermore, a circumferential direction refers to a circumferential direction around the central axis of the rotatable shaft 11.

The housing 20 is shaped in a cylindrical tubular form, and the stator 30 and the rotor 40 are received in the housing 20. Two bearings 23, 24 are installed in the housing 20, and the rotatable shaft 11 is rotatably supported by the bearings 23, 24. A central axis of an inner peripheral surface of the housing 20 is coaxial with the central axis of the rotatable shaft 11. An angle sensor 12 is installed to an axial end portion of the rotatable shaft 11. The angle sensor 12 may be a magnetic sensor or a resolver.

The stator 30 is axially placed generally at a center portion of the housing 20 and is shaped in a cylindrical tubular form along an inner periphery of the housing 20. The stator 30 is fixed to an inner peripheral surface of the housing 20 such that the stator 30 is centered on the central axis O of the rotatable shaft 11. The stator 30 forms part of a magnetic circuit. The stator 30 includes: a stator core 31 which is shaped in a circular ring form and is positioned on a radially outer side of the rotor 40; and a plurality of stator windings 32 which are wound around the stator core 31.

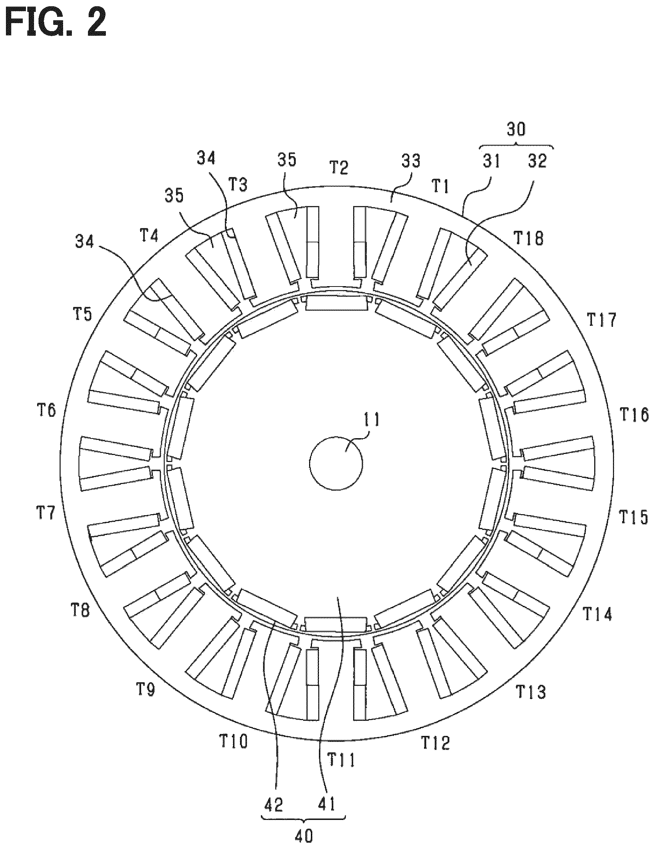

As shown in FIG. 2, the stator core 31 includes: a back yoke 33 which is shaped in a circular ring form; and a plurality of teeth 34 which radially inwardly project from the back yoke 33 and arranged at predetermined intervals in the circumferential direction. Each of a plurality of slots 35 is formed between corresponding adjacent two of the teeth 34. In the stator core 31, the teeth 34 are arranged at equal intervals in the circumferential direction, and the stator windings 32 are wound around these teeth 34. As a result, conductors of the stator windings 32 are respectively received in each corresponding one of the slots 35. In the present embodiment, the number of the teeth 34 and the number of the slots 35 are each set to 18. For the sake of explanation, the teeth 34 are designated with reference signs T1 to T18, respectively, in this order in a counterclockwise direction along the circumferential direction. When it is necessary to indicate the tooth number, the teeth 34 are also referred to as teeth T1, T2, T3, and so on. The stator windings 32 are held in a state where the stator windings 32 are respectively received in each corresponding one of the slots 35, and the stator windings 32 generate a magnetic flux when an electric power (AC power) is supplied to the stator windings 32.

The stator core 31 is formed by using a plurality of steel plates (core sheets) each made of a thin magnetic material, and these steel plates are stacked in the axial direction of the stator core 31. The steel plates may be formed, for example, by pressing and punching a strip of electromagnetic steel sheet.

The rotor 40 forms part of the magnetic circuit. The rotor 40 has a plurality of magnetic poles arranged in the circumferential direction and are opposed to the stator 30 in the radial direction. In the present embodiment, the number of the magnetic poles of the rotor 40 is 14 (i.e., the number of magnetic pole pairs is 7). The rotor 40 includes: a rotor core 41 made of a magnetic material; and a plurality of permanent magnets 42 fixed to the rotor core 41. Specifically, as shown in FIG. 2, the rotor 40 has the permanent magnets 42, which serve as magnet parts and are arranged to form alternating polarities in the circumferential direction. These permanent magnets 42 are embedded in receiving holes of the rotor core 41 each of which extends in the axial direction of the rotor core 41.

The rotor 40 may have a known structure, such as an IPM (Interior Permanent Magnet) type rotor or an SPM (Surface Permanent Magnet) type rotor. Additionally, a field winding type rotor may be employed as the rotor 40. In the present embodiment, the IPM type rotor is employed. The rotatable shaft 11 is inserted through the rotor 40 such that the rotor 40 is fixed to the rotatable shaft 11 to rotate integrally with the rotatable shaft 11 about the rotatable shaft 11.

A control device 50 is connected to the electric motor 10. The control device 50 includes a microcomputer, which has a CPU, a ROM, a RAM and I/O device, as a main component of the control device 50. The control device 50 implements various functions when the CPU executes a program(s) stored in the ROM. The various functions may be realized by an electronic circuit(s), which is hardware, or at least partially by software, i.e., processes executed on the computer.

One of the functions of the control device 50 is a function of converting the electric power supplied from an external source (e.g., a battery) and supplying the converted electric power to the electric motor 10 to generate a drive force at the electric motor 10. Additionally, for example, the control device 50 also has a function of controlling the electric motor 10 (such as electric current control) by using information about the rotational angle inputted from the angle sensor 12.

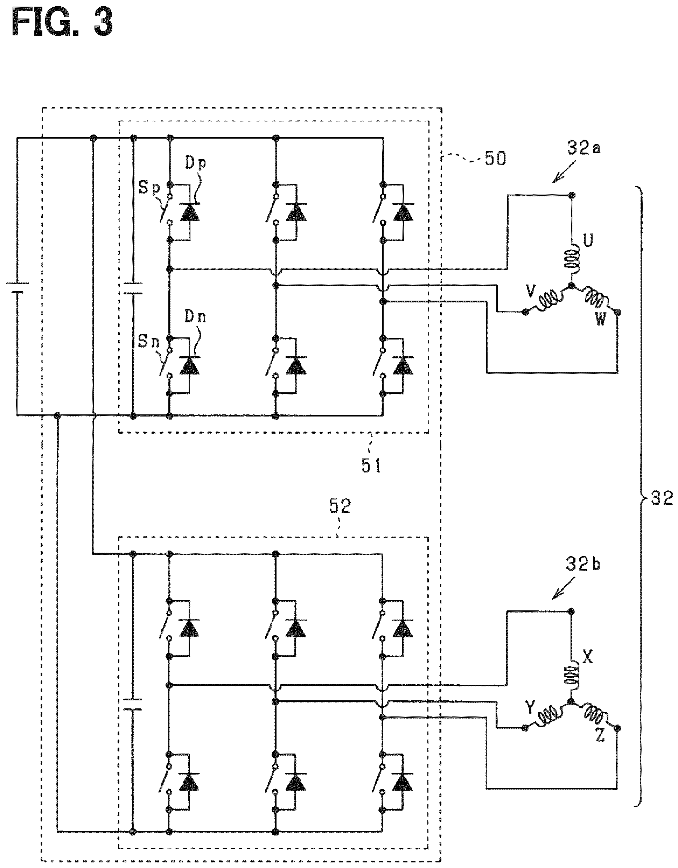

FIG. 3 is a diagram showing an electrical structure of the control device 50 according to the present embodiment.

In the present embodiment, the stator windings 32 include a first set of stator windings 32a and a second set of stator windings 32b. The control device 50 includes a first inverter circuit 51 and a second inverter circuit 52 which are respectively provided to the first set of stator windings 32a and the second set of stator windings 32b. Each inverter circuit 51, 52 is formed by a full-bridge circuit that includes a plurality of pairs of upper and lower arms while the number of the pairs of upper and lower arms is equal to the number of phases of the three-phase system. The control device 50 controls the electric current in each phase by turning the switching device provided in each corresponding arm on and off.

Specifically, the first inverter circuit 51 includes a series connection of an upper arm switch Sp and a lower arm switch Sn as switching devices for each of the three phases, i.e., a U-phase, a V-phase and a W-phase. In the present embodiment, a voltage-controlled semiconductor switching device is used as each of the upper arm switch Sp and the lower arm switch Sn for each phase, specifically using an IGBT (Insulated Gate Bipolar Transistor). A MOSFET may be used as the switching device. A freewheeling diode (recirculating diode) Dp, Dn is connected in reverse parallel to each of the upper arm switch Sp and the lower arm switch Sn for each phase.

A high-potential side terminal (collector) of the upper arm switch Sp for each phase is connected to a positive terminal of the battery. Additionally, a low-potential side terminal (emitter) of the lower arm switch Sn for each phase is connected to a negative terminal (ground) of the battery. An intermediate connection point between the upper arm switch Sp and the lower arm switch Sn for each phase is connected to one end of a corresponding phase winding among the first set of stator windings 32a. The first set of stator windings 32a includes a U-phase winding, a V-phase winding and a W-phase winding. In the first inverter circuit 51, one end of each of the U-phase winding, the V-phase winding and the W-phase winding is connected to the corresponding intermediate connection point between the corresponding upper arm switch Sp and the corresponding lower arm switch Sn.

Since the second inverter circuit 52 has the same structure as the first inverter circuit 51, a detailed explanation of the second inverter circuit 52 is omitted here. The second set of stator windings 32b include a X-phase winding, a Y-phase winding and a Z-phase winding. In the second inverter circuit 52, one end of each of the X-phase winding, the Y-phase winding and the Z-phase winding is connected to the intermediate connection point between the corresponding upper arm switch Sp and the corresponding lower arm switch Sn.

The three-phase current supplied from the first inverter circuit 51 and the three-phase current supplied from the second inverter circuit 52 have a predetermined current phase difference from each other.

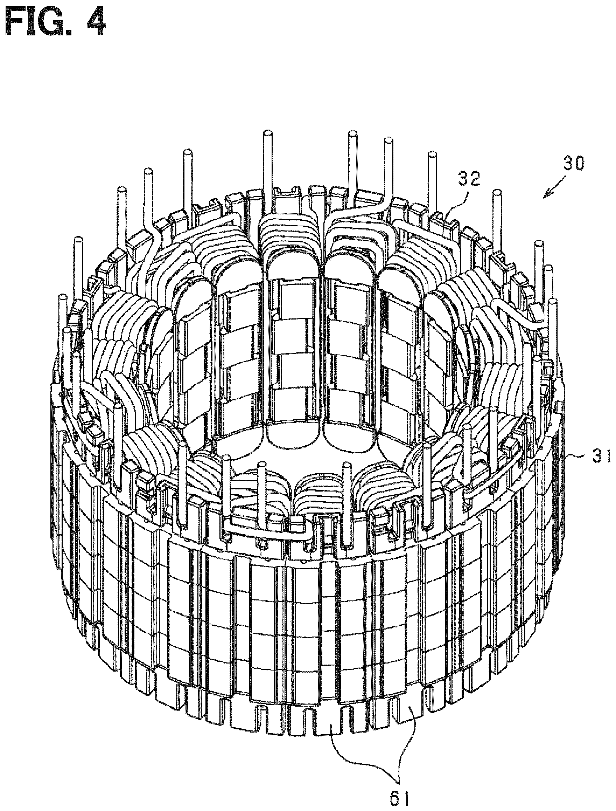

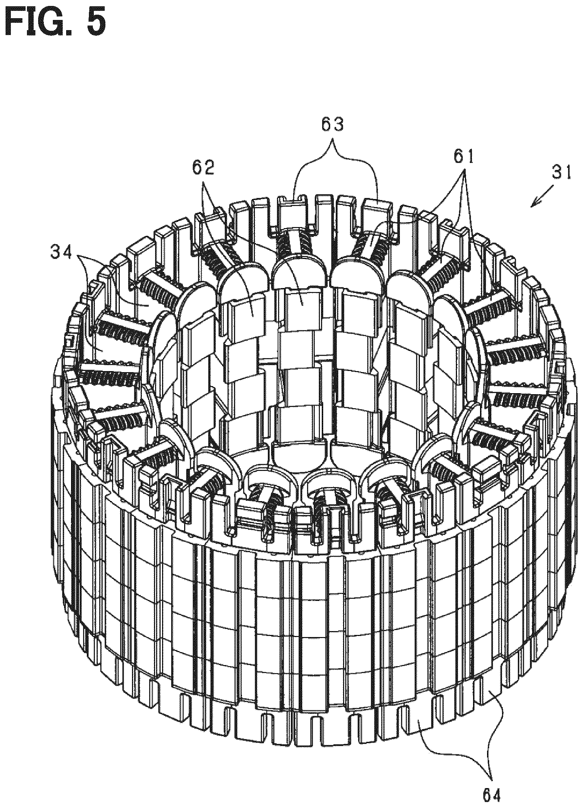

FIG. 4 is a perspective view illustrating a specific structure of the stator 30, and FIG. 5 is a perspective view illustrating a structure of the stator core 31. The stator 30 shown in FIG. 4 corresponds to the stator 30 shown in FIG. 2.

In the stator 30, the stator core 31 is formed by a plurality of segmented cores 61. These segmented cores 61 are arranged in the circumferential direction, forming the stator core 31 into a cylindrical tubular form. Each segmented core 61 has the corresponding tooth 34. When the segmented cores 61 are arranged in the circumferential direction, the teeth 34 and slots 35 are alternately arranged in the circumferential direction as shown in FIG. 2. In the present embodiment, the stator core 31 is formed by eighteen segmented cores 61. The stator windings 32 are formed by winding each of conductor wires around each corresponding one of the teeth 34 using concentrated winding. It is preferable that adjacent segmented cores 61 in the circumferential direction are joined together by adhesive or other means.

Each of the segmented cores 61 includes: a core main body 62, which is a steel sheet laminate; and two electrical insulation members 63, 64, which are made of, for example, a dielectric resin material. The two electrical insulation members 63, 64 are installed to one axial end portion and the other axial end portion of the core main body 62, and the corresponding conductor wire is wound a plurality of times across each electrical insulation member 63, 64, thereby winding the winding segment around the tooth 34 of the segmented core 61.

In a structure shown in FIG. 4, a winding end portion of each winding wound around each tooth 34 is pulled out from the tooth 34, and the winding end portions of the windings are joined in a predetermined order by a wiring module (not shown) installed to a coil end of the stator 30.

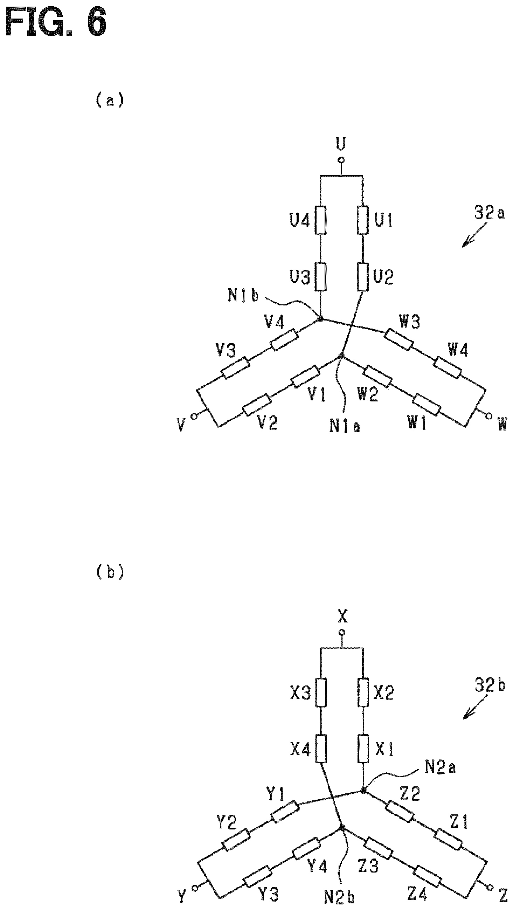

FIG. 6 shows one example of electrical configurations of the stator windings 32. Here, (a) of FIG. 6 shows the configuration of the U-phase winding, the V-phase winding and the W-phase winding of the first set of stator windings 32a. Furthermore, (b) of FIG. 6 shows the configuration of the X-phase winding, the Y-phase winding and the Z-phase winding of the second set of stator windings 32b. In each set of stator windings 32a, 32b, the phase windings are connected with each other by a star connection (Y-connection).

As shown in (a) of FIG. 6, in the first set of stator windings 32a, the U-phase winding includes four winding segments U1, U2, U3, U4, and the V-phase winding includes four winding segments V1, V2, V3, V4, and the W-phase winding include four winding segments W1, W2, W3, W4. One end of a series-connected winding section with the winding segments U1, U2 connected in series, one end of a series-connected winding section with the winding segments V1, V2 connected in series, and one end of a series-connected winding section with the winding segments W1, W2 connected in series are connected together at a neutral point N1a. Furthermore, one end of a series-connected winding section with the winding segments U3, U4 connected in series, one end of a series-connected winding section with the winding segments V3, V4 connected in series, and one end of a series-connected winding section with the winding segments W3, W4 connected in series are connected together at a neutral point N1b.

As shown in (b) of FIG. 6, in the second set of stator windings 32b, the X-phase winding includes four winding segments X1, X2, X3, X4, and the Y-phase winding includes four winding segments Y1, Y2, Y3, Y4, and the Z-phase winding includes four winding segments Z1, Z2, Z3, Z4. One end of a series-connected winding section with the winding segments X1, X2 connected in series, one end of a series-connected winding section with the winding segments Y1, Y2 connected in series, and one end of a series-connected winding section with the winding segments Z1, Z2 connected in series are connected together at a neutral point N2a. Furthermore, one end of a series-connected winding section with the winding segments X3, X4 connected in series, one end of a series-connected winding section with the winding segments Y3, Y4 connected in series, and one end of a series-connected winding section with the winding segments Z3, Z4 connected in series are connected together at a neutral point N2b.

Besides the above-described configuration where in each set of stator windings 32a, 32b, the four winding segments of each phase winding are divided to form two series-connected winding sections each with the two winding segments connected in series, and the corresponding series-connected winding sections are connected together to form the star connection, the following arrangement may be employed. That is, in each set of stator windings 32a, 32b, the four winding segments of each phase winding may be divided to form two winding sections connected in parallel, and the corresponding winding sections may be connected together to form the star connection. In this case, the two neutral points (N1a, N1b) in the first set of stator windings 32a are integrated into one neutral point, and the two neutral points (N2a, N2b) in the second set of stator windings 32b are also integrated into one neutral point.

Furthermore, in the first set of stator windings 32a, the winding segments U1-U4, V1-V4, W1-W4 of each phase may be connected in series, and the three series-connected phase windings may be connected by a star connection. Also, in the second set of stator windings 32b, the winding segments X1-X4, Y1-Y4, Z1-Z4 of each phase may be connected in series, and the three series-connected phase windings may be connected by a star connection. In each set of stator windings 32a, 32b, it is also possible to connect the phase windings using a delta connection (Δ connection) instead of the star connection (Y connection).

In the stator core 31, the total of eighteen teeth 34 are divided into a plurality of tooth groups each of which is formed by corresponding three of the teeth 34 which are consecutively arranged in the circumferential direction, and the winding segments of corresponding two different phase windings are wound on these three teeth 34 of each tooth group. In this case, corresponding two of the winding segments U1-U4, V1-V4, W1-W4 of the first set of stator windings 32a and corresponding two of the winding segments X1-X4, Y1-Y4, Z1-Z4 of the second set of stator windings 32b are distributed to and are wounded over each corresponding tooth group having the corresponding three teeth. Specifically, at each tooth group, one of the two winding segments of the corresponding one of the first set of stator windings 32a is wound around one of circumferentially opposite two of the three teeth 34, and one of the two winding segments of the corresponding one of the second set of stator windings 32b is wound around the other one of the circumferentially opposite two of the three teeth 34. Furthermore, at each tooth group, the other one of the two winding segments of the corresponding one of the first set of stator windings 32a and the other one of the winding segments of the corresponding one of the second set of stator windings 32b are wound around a center tooth 34 centered among the three teeth 34.

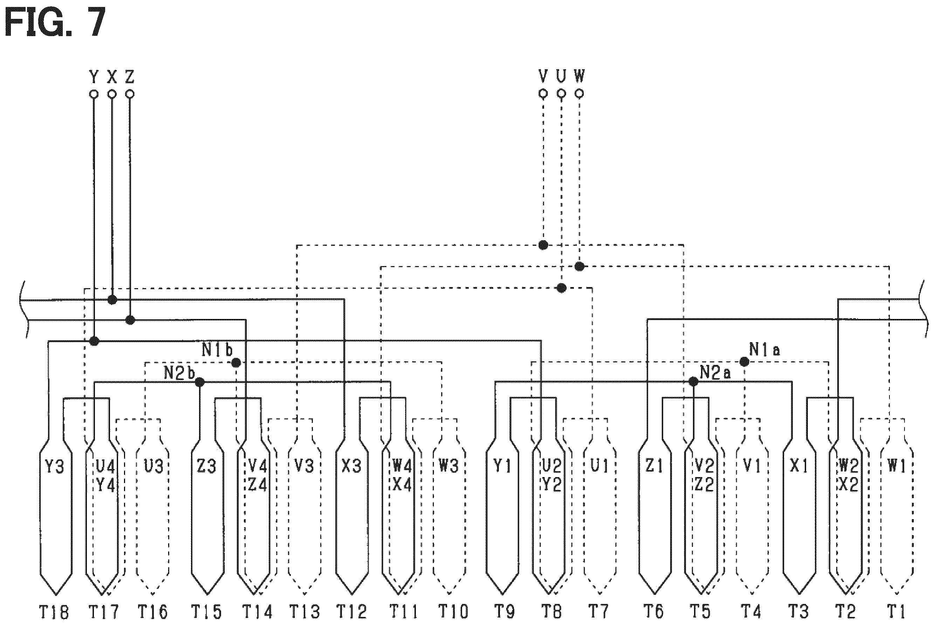

FIG. 7 is a diagram showing a corresponding relationship of each of the winding segments of the stator windings 32a, 32b relative to its corresponding tooth T1-T18. In FIG. 7, four winding segments are wound on each tooth group (consisting of three teeth consecutively arranged), such as the group of three teeth T1-T3, the group of three teeth T4-T6, the group of three teeth T7-T9, and so on. For example, the winding segment W1 of one of the first set of stator windings 32a is wound around the tooth T1, and the winding segment W2 of the one of the first set of stator windings 32a and the winding segment X2 of one of the second set of stator windings 32b are wound around the tooth T2, and the winding segment X1 of the one of the second set of stator windings 32b is wound around the tooth T3. The explanation for the other tooth groups is omitted, but the winding segments of each of the remaining tooth groups are wound in the same manner as that of the tooth group described above. The winding segments are wound on the first to third teeth of each of the remaining tooth groups in a manner shown in the drawing.

In the rotary electric machine, noises and vibrations caused by torque ripple are disadvantageously generated. The torque ripple mainly consists of 6th-order harmonic components or 12th-order harmonic components, and thereby it is desirable to suppress these. Therefore, it is desirable to perform the following control in the control device 50 using the electric motor 10 with the above configuration.

In the electric motor 10 of the above-described structure, the first tooth (T1, T4, T7, T10, T13, T16) of each tooth group is wound with the winding segment (a first coil body) of the corresponding one of the U-phase, V-phase and W-phase of the first set of stator windings 32a, and the second tooth (T2, T5, T8, T11, T14, T17) of each tooth group is wound with the winding segment (a second coil body) of the corresponding one of the U-phase, V-phase and W-phase of the first set of stator windings 32a and the winding segment (a second coil body) of the corresponding one of the X-phase, Y-phase and Z-phase of the second set of stator windings 32b, and the third tooth (T3, T6, T9, T12, T15, T18) of each tooth group is wound with the winding segment (a third coil body) of the corresponding one of the X-phase, Y-phase and Z-phase of the second set of stator windings 32b.

In this structure, a cumulative phase difference, which is a sum of each phase difference between a magnetomotive force generated by the winding segment of the corresponding phase of the first set of stator windings 32a wound around the second tooth and a magnetomotive force generated by the winding segment of the corresponding phase of the second set of stator windings 32b wound around the second tooth in each of the tooth groups, is set by the control device 50 such that each phase difference of the magnetomotive force of the second coil body of the corresponding phase relative to the magnetomotive force of the first coil body of the corresponding phase and each phase difference of the magnetomotive force of the third coil body of the corresponding phase relative to the magnetomotive force of the second coil body of the corresponding phase are within a predetermined phase range that includes 20 degrees in electrical angle, or each phase difference of the magnetomotive force of the third coil body of the corresponding phase relative to the magnetomotive force of the first coil body of the corresponding phase and each phase difference of the magnetomotive force of the second coil body of the corresponding phase relative to the magnetomotive force of the third coil body of the corresponding phase are within a predetermined phase range that includes 20 degrees in electrical angle. The cumulative phase difference is preferably set within, for example, a range of 72 to 88 degrees in electrical angle. Alternatively, the control device 50 may set a cumulative phase difference as a sum of each phase difference between the electric current flowing through the winding segment of the first set of stator windings 32a wound around the second tooth and the electric current flowing through the winding segment of the second set of stator windings 32b wound around the same second tooth in each of the tooth groups. The details of this control are described in JP7103299B2 filed by the applicant of this application.

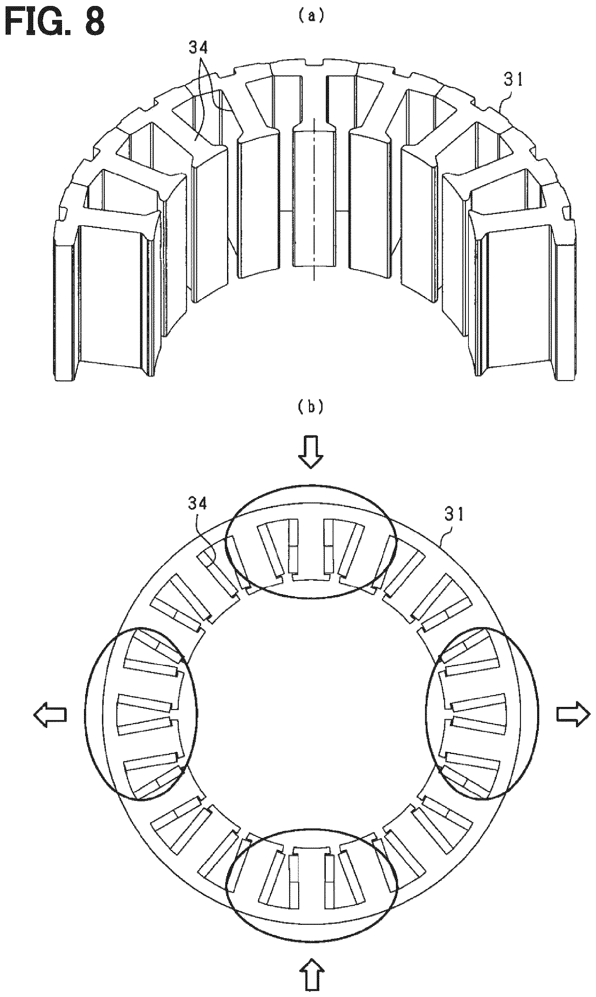

As described above, in the electric motor 10 of the present embodiment, the stator 30 has the concentrated winding structure, and the number of the magnetic poles of the rotor 40 is fourteen (i.e., 14) while the number of the slots in the stator 30 is eighteen (i.e., 18). Due to this combination of the number of the magnetic poles and the number of the slots, there is concern that radial vibrations induced by the 8th-order harmonic components and the 10th-order harmonic components may occur. Here, (a) of FIG. 8 is a perspective view showing the structure of the stator core before taking the countermeasures of the present embodiment, and (b) of FIG. 8 is a diagram showing a range in which the radial acceleration is induced by the 8th-order harmonic components and the 10th-order harmonic components in the stator core in (a) of FIG. 8. In (a) of FIG. 8, each of the teeth 34 of the stator core 31 extends parallel to the axial direction, and a flange portion formed at a distal end portion of the tooth 34 extends uniformly on one side and the other side in the circumferential direction.

The radial accelerations shown in (b) of FIG. 8 are based on results obtained from the analysis conducted by the inventors of the present application. Radially inward acceleration occurs in a radially inward direction at two positions which are approximately 180° apart from each other in the circumferential direction, while radially outward acceleration occurs in a radially outward direction at two positions which are also approximately 180° apart from each other in the circumferential direction but offset by about 90° from the positions of the radially inward acceleration. In this case, radial electromagnetic forces, which deform the stator core 31 into an elliptical form, are generated, raising concerns about occurrence of noises with the same orders.

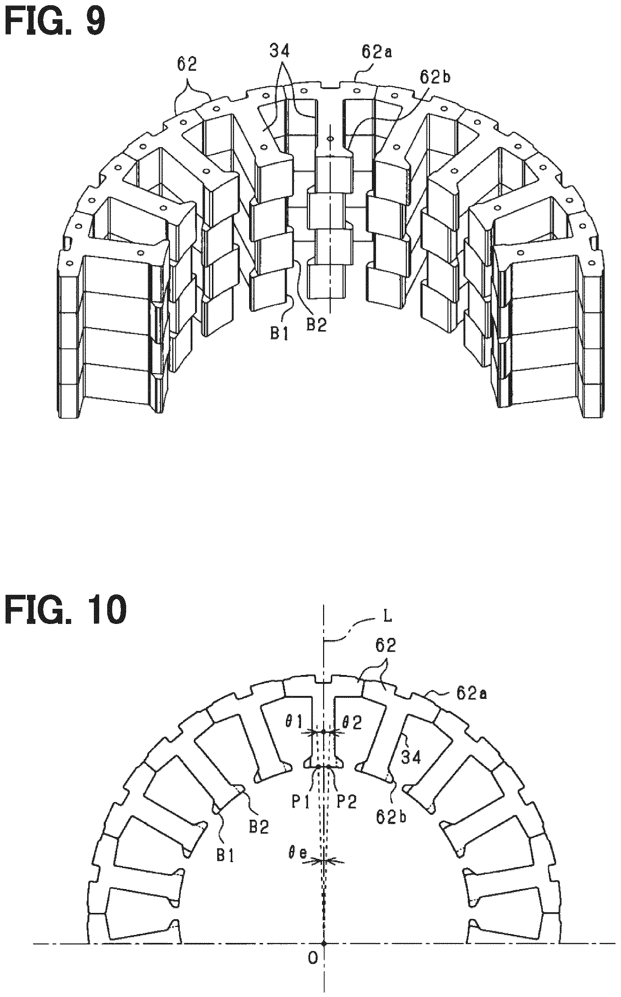

Therefore, in the present embodiment, the countermeasures are taken against the 8th-order radial vibration and 10th-order radial vibration. Hereinafter, the countermeasures for the radial vibrations will be described, in which a skew structure is formed at the distal end portion of each of the teeth 34 of the stator core 31. FIG. 9 is a perspective view showing a stepped skew structure of the stator core 31. FIG. 9 shows a structure in which the electrical insulation members 63, 64 are removed from the structure of FIG. 5 (i.e., an assembly of the core main bodies 62).

Each core main body 62 includes: the tooth 34 extending in the radial direction; and a yoke portion 62a formed at the proximal end portion of the tooth 34 in the radial direction, and the flange portion 62b, which extends in the circumferential direction, is formed at the distal end portion of the tooth 34. The yoke portion 62a corresponds to the back yoke 33 of the stator core 31 shown in FIG. 2.

Additionally, the core main body 62 is formed in a state where a plurality of blocks are joined in the axial direction (the up-down direction in the drawing). In the present embodiment, the core main body 62 is formed by joining four blocks in the axial direction, and a shape of the flange portion 62b at the distal end portion of the tooth 34 differs between each adjacent two of the blocks which are adjacent to each other in the up-to-down direction. Specifically, in each block, the amount of projection of the flange portion 62b relative to the circumferential center point of the tooth 34 in the circumferential direction differs between two opposite circumferential sides of the tooth 34. Furthermore, in each adjacent two of the blocks which are adjacent to each other in the up-to-down direction, the large amount of projection and the small amount of projection of the flange portion 62b are reversed between the left and right sides. In other words, in the structure shown in FIG. 9, the flange portion 62b includes a plurality (two in this instance) of primary tooth blocks B1, in each of which the flange portion 62b projects more toward one side than the other side in the circumferential direction, and a plurality (two in this instance) of secondary tooth blocks B2, in each of which the flange portion 62b projects more toward the other side than the one side in the circumferential direction. These tooth blocks B1, B2 are alternately arranged in the axial direction. Each of these tooth blocks B1, B2 may preferably be formed using the same shape and stacked with their axial orientations reversed relative to each other.

The flange portion 62b of each core main body 62 corresponds to a skewed portion where stepped skewing is applied. In a coil winding portion (excluding the flange portion 62b) of each tooth block, where the coil (the winding) is wound, a circumferential center point is located at the same position. In the present embodiment, the number of the skewed steps in the axial direction of the stator 30 are set to four. However, the number of the skewed steps is preferably three or more in the axial direction.

FIG. 10 is a diagram for explaining a skew angle of the stator core 31. FIG. 10 is a plan view of the core main bodies 62, showing a state in which the primary tooth blocks B1 and the secondary tooth blocks B2 are stacked in the axial direction.

Here, a straight line, which connects the circumferential center point of the tooth 34 and the central axis O (the center point of the stator) is denoted as L. Furthermore, at the distal end portion of the tooth 34, the circumferential center point of the primary tooth block B1 is denoted as P1, and the circumferential center point of the secondary tooth block B2 is denoted as P2. In this case, an angle θ1, which is defined by a straight line between O and P1 relative to the straight line L on the primary tooth block B1, and an angle θ2, which is defined by a straight line between O and P2 relative to the straight line L on the secondary tooth block B2, are equal to each other (θ1 = θ2). Furthermore, an angle θe, which is a sum of these angles θ1, θ2 is defined as a skew angle.

The skew angle θe represents the displacement angle of the circumferential center point of the flange portion 62b described above. Specifically, the skew angle θe is preferably set as follows to limit the radial vibrations induced by the 8th-order harmonic components and the 10th-order harmonic components. That is, as the countermeasure for the 8th-order harmonic components, an electrical angle of 180°/8 = 22.5° is the ideal skew angle θe, and as the countermeasure for the 10th-order harmonic components, an electrical angle of 180°/10 = 18° is the ideal skew angle θe. Considering these factors, the skew angle θe is preferably set within a range of 14° to 23° in electrical angle.

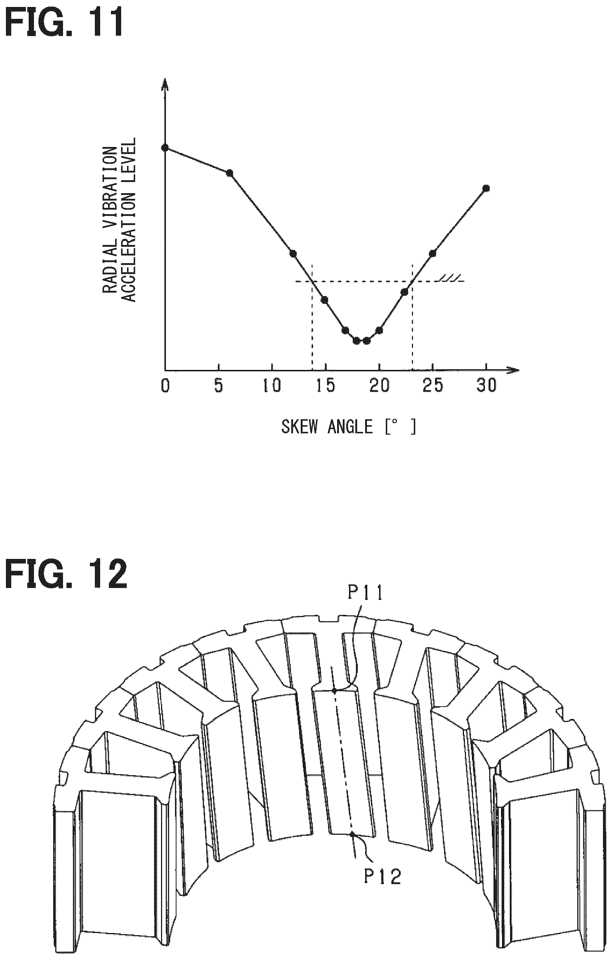

According to the above skew structure, the radial electromagnetic forces induced by the 8th-order harmonic components and the 10th-order harmonic components generated at the stator 30 are canceled out, thereby limiting the radial vibrations. FIG. 11 is a diagram showing a relationship between a level of radial vibration acceleration and the skew angle θe at a location in the stator core 31 where the radial vibration acceleration induced by the 8th-order harmonic components and the 10th-order harmonic components reaches its maximum. According to FIG. 11, there is a correlation between the skew angle θe and the level of the radial vibration acceleration, indicating that adjusting the skew angle θe enables a reduction of the radial vibration acceleration. In the present embodiment, the skew angle θe is set within the range of 14° to 23° to reduce the radial vibration acceleration.

The embodiment described above can achieve the following advantages.

In the electric motor 10 with the concentrated winding structure, where the number of the magnetic poles of the rotor 40 is fourteen (i.e., 14), and the number of the slots of the stator 30 is eighteen (i.e., 18), the stator 30 has the skew that is configured to limit the radial vibrations induced by the 8th-order harmonic components and the 10th-order harmonic components. In this case, by adding the skew structure, the radial electromagnetic forces induced by the 8th-order harmonic components and the 10th-order harmonic components can be reduced, and the deformation of the stator 30 can be limited. As a result, the quietness of the electric motor 10 with the specific number of the magnetic poles and the specific number of the slots can be improved.

In the rotary electric machine where the radial vibrations occur in the stator 30, the structural reinforcement, such as resin impregnation, can be considered as a possible countermeasure. However, with the structure described above that limits the radial vibrations, the structural reinforcement through the resin impregnation or similar measures becomes unnecessary, allowing for cost reduction effects to be expected.

In the stepped skew structure of the stator 30, the displacement angle of the circumferential center point of the flange portion 62b at the distal end portion of the tooth is defined as the skew angle θe, and this skew angle θe is set within the range of 14° to 23° in electrical angle. This enables the radial vibrations induced by the 8th-order harmonic components and the 10th-order harmonic components to be effectively limited.

According to the structure, in which the stepped skew is applied to the distal end portion of each tooth of the stator core 31, the desired structure can be achieved simply by modifying the core sheets, offering potential cost advantages. In this case, by flipping the tooth blocks (or core sheets) stacked in the axial direction, a biasing direction of the flange portion 62b at the distal end portion of the tooth can be changed, minimizing cost increases in achieving the skew structure.

The number of the skew steps of the stator 30 in the axial direction is set to three or more, specifically four. In this case, for example, compared to a case of setting the number of the skew steps to two, the robustness of the radial vibration limiting effect against dimensional variations can be improved.

### (Other Embodiments)

The above embodiments may be modified, for example, as follows.

As shown in FIG. 12, the stator 30 may also adopt a linear skew structure in which the skew is continuously inclined along the axial direction. In this case, in the stator core 31, the teeth 34 are arranged to extend in a direction inclined with respect to the axial direction. Here, a center point P11 of the distal end portion of the tooth at one axial end thereof and a center point P12 of the distal end portion of the tooth at the other axial end thereof are offset from each other in the circumferential direction. In this structure, the projecting dimensions of the flange portion 62b at the distal end portion of the tooth, which are measured on the two opposite circumferential sides, respectively, are uniform when viewed in the axial direction. For example, it is preferable that the projecting dimensions on the one circumferential side and the other circumferential side are the same.

The skew angle θe is an angle defined between a straight line, which connects between the center point P11 at the one axial end of the distal end portion of the tooth and the center point of the stator (not shown), and a straight line, which connects between the center point P12 at the other axial end of the distal end portion of the tooth and the center point of the stator. In the linear skew structure, the skew angle θe is preferably set within a range of 28° to 46° in electrical angle. The skew angle θe corresponds to the circumferential displacement angle generated by the linear skew. That is, as the countermeasure for the 8th-order harmonic components, an electrical angle of 360°/8 = 45° is the ideal skew angle θe, and as the countermeasure for the 10th-order harmonic components, an electrical angle of 360°/10 = 36° is the ideal skew angle θe. Considering these factors, the skew angle θe is preferably set within a range of 28° to 46° in electrical angle. Even with the above-mentioned linear skew structure, the radial vibrations induced by the 8th-order harmonic components and the 10th-order harmonic components can be effectively limited. Even in the case where the linear skew structure is adapted, there is also a correlation between the skew angle θe and the level of radial vibration acceleration (see FIG. 11), and thereby within the predetermined angle range (28° to 46° in electrical angle), the radial vibration acceleration can be reduced to a desired level.

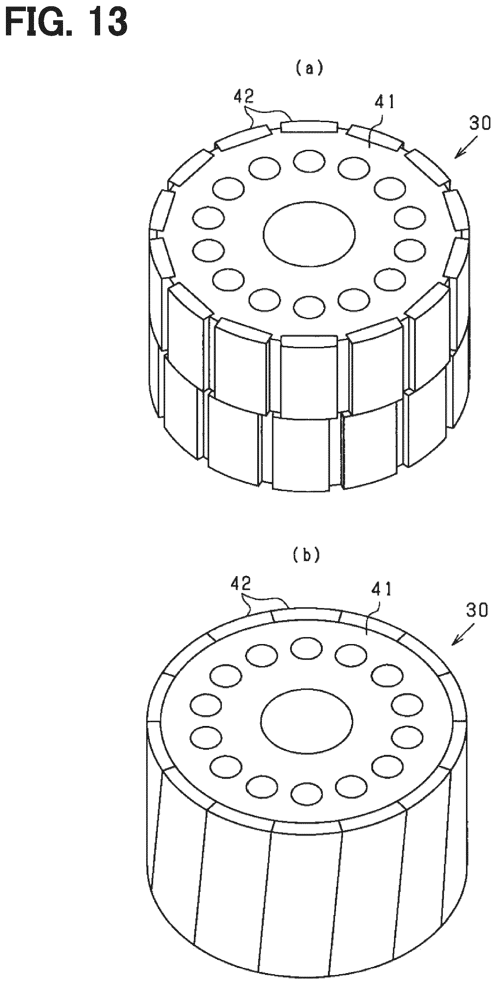

Instead of applying the skew structure to the stator 30, it is also possible to apply the skew structure to the rotor 40. Specifically, as shown in (a) of FIG. 13, in the rotor 40 having the skew, a magnetic pole center point of each of the plurality of magnetic poles arranged in the circumferential direction may be displaced in a stepped manner along the axial direction, and a skew angle θe, which is a displacement angle of the magnetic pole center point of the magnetic pole, may be set within a range of 14° to 23° in electrical angle. In (a) of FIG. 13, the plurality of permanent magnets 42 are fixed to an outer peripheral surface of the rotor core 41, and each magnetic pole is formed by the corresponding one of the permanent magnets 42. In each magnetic pole, a plurality of positions of each permanent magnet 42 arranged along the axial direction are offset in a stepped manner, thereby forming a stepped skew structure. The skew angle θe is an angle defined between a straight line, which connects between a center point of the permanent magnet at one axial end thereof and the rotational center, and a straight line, which connects between a center point of the permanent magnet at the other axial end thereof and the rotational center. In the illustrated structure, the number of the steps arranged in the axial direction is two. However, the number of the steps arranged in the axial direction may be equal to or larger than three (for example, four).

As shown in (b) of FIG. 13, the rotor 40 may also adopt a linear skew structure in which the skew is continuously inclined along the axial direction. In this case, the permanent magnet 42 of each magnetic pole is arranged to extend in a direction inclined with respect to the axial direction, and the skew angle θe, which is the circumferential displacement angle, is preferably set within a range of 28° to 46° in electrical angle.

As the electric motor 10, it is also possible to use a rotary electric machine in which the number of the magnetic poles of the rotor 40 and the number of the slots of the stator 30 are defined as follows: in the electric motor 10, the number of the magnetic poles may be set to 22, and the number of the slots may be set to 18; in the electric motor 10, the number of the magnetic poles may be set to 16, and the number of the slots may be set to 18; or in the electric motor 10, the number of the magnetic poles may be set to 20, and the number of the slots may be set to 18. Even in each of these rotary electric machines, one of the stator 30 and the rotor 40 may have a skew to limit the radial vibrations induced by the 8th-order harmonic components and the 10th-order harmonic components.

In the stator core 31, each segmented core 61 may have a plurality of teeth 34 arranged in the circumferential direction. For example, each segmented core 61 may have three teeth 34. Additionally, the stator core 31 may have a non-segmented structure, i.e., an integrally formed circular ring form that is not divided in the circumferential direction.

In the above embodiment, the stator windings 32 include the first set of stator windings 32a and the second set of stator windings 32b and thereby include the total of the six-phase windings for the six phases. However, this can be modified such that the stator windings 32 include only the three-phase windings for three phases.

The rotary electric machine may be an outer rotor type instead of the inner rotor type.

Although the present disclosure has been described with reference to the embodiments and the modifications, it is understood that the present disclosure is not limited to the embodiments and the modifications and structures described therein. The present disclosure also includes various variations and variations within the equivalent range. Also, various combinations and forms, as well as other combinations and forms that include only one element, more, or less, are within the scope and ideology of the present disclosure.

## Claims

1. A rotary electric machine (10) comprising:
a rotor (40) that includes a plurality of magnetic poles arranged in a circumferential direction; and
a stator (30) that includes:
a stator core (31) which includes a plurality of teeth (34) arranged in the circumferential direction; and
a plurality of stator windings (32) which are respectively provided for a plurality of phases and are wound on the plurality of teeth using concentrated winding, wherein:
a number of the plurality of magnetic poles of the rotor is 18 ± 4, and a number of a plurality of slots, each of which is formed between corresponding adjacent two of the plurality of teeth, is 18;
or
the number of the plurality of magnetic poles of the rotor is 18 ± 2, and the number of the plurality of slots, each of which is formed between the corresponding adjacent two of the plurality of teeth, is 18; and
one of the stator and the rotor has a skew that is configured to limit radial vibrations induced by 8th-order harmonic components and 10th-order harmonic components.

2. The rotary electric machine according to claim 1, wherein:
the one of the stator and the rotor has a stepped skew structure in which the skew is stepped along an axial direction; and
in a case where the stator has the skew, a flange portion (62b), which is formed at a distal end portion of each of the plurality of teeth and extends in the circumferential direction, is a skewed portion, and a skew angle, which is a displacement angle of a circumferential center point of the flange portion of each of the plurality of teeth, is set within a range of 14° to 23° in electrical angle;
or
in a case where the rotor has the skew, a magnetic pole center point of each of the plurality of magnetic poles arranged in the circumferential direction is displaced in a stepped manner along the axial direction, and a skew angle, which is a displacement angle of the magnetic pole center point of each of the plurality of magnetic poles, is set within a range of 14° to 23° in electrical angle.

3. The rotary electric machine according to claim 2, wherein the skew has three or more steps along the axial direction.

4. The rotary electric machine according to claim 1, wherein:
the one of the stator and the rotor has a linear skew structure where the skew is continuously inclined along an axial direction; and
a skew angle, which is a displacement angle of the skew measured in the circumferential direction, is set within a range of 28° to 46° in electrical angle.
